# EUROPEAN PATENT SPECIFICATION

(11) **EP 4 123 809 B1**
(45) Date of publication and mention of the grant of the patent: **03.07.2024**
(21) Application number: 21186948.2
(22) Date of filing: 21.07.2021
(51) Int. Cl.: H01M 50/249, H01M 50/505, H01M 50/507, H01M 50/51, H01M 50/514, H01M 50/559, H01M 50/107, H01M 50/512

(54) **A BATTERY MODULE, A BATTERY PACK, AN ELECTRIC VEHICLE, AND A METHOD OF MOUNTING A BATTERY MODULE**
BATTERIEMODUL, BATTERIEPACK, ELEKTRISCHES FAHRZEUG UND VERFAHREN ZUR MONTAGE EINES BATTERIEMODULS
MODULE DE BATTERIE, BLOC-BATTERIE, VÉHICULE ÉLECTRIQUE ET PROCÉDÉ DE MONTAGE DE MODULE DE BATTERIE

(43) Date of publication of application: 25.01.2023
(73) Proprietor: Samsung SDI Co., Ltd., Yongin-si, Gyeonggi-do 17084 (KR)
(72) Inventor: Nemes, Marton, 8054 Seiersberg-Pirka (AT)
(74) Representative: Gulde & Partner

(56) References cited:
- EP-A1- 2 704 230
- WO-A1-2021/074566
- CN-A- 108 666 466
- CN-U- 206 076 303
- CN-U- 206 076 348

## Description

### Field of the Disclosure

The present disclosure relates to a battery module for an electric vehicle. The present disclosure also relates to a battery pack comprising the battery module, an electric vehicle comprising the battery pack, and to a method of mounting the battery module.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

In general, rechargeable batteries include an electrode assembly including a positive electrode, a negative electrode, and a separator interposed between the positive and negative electrodes, a case, also called can, receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*)*.*

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

The mechanical integration of such a battery module requires appropriate mechanical connections between the individual components, e.g. of secondary battery cells, and between them and the negative current collector structure. These connections must remain functional and save during the average service life of the battery system. Further, installation space requirements must be met, especially in mobile applications. The electrical connections between individual components of the battery modules, e.g. of secondary battery cells, and between them and the negative current collector structure, requires reliability, low transition resistance and cost-effective mountability.

In the prior art, the connection between the negative current collector structure and the cell are realized by well known methods, such as screwing, welding and/or bonding, in order to achieve a durable low resistance connection that is also suitable for high volume production processes. The manufacture of connections according to the prior art is based on said well known methods, especially for cell types with two dedicated separate cell poles, such as prismatic type cells or pouch type cells. However, for cylindrical cells, wherein one pole is comprised by the circular shaped cell can, these connections are not suitable as the contact area is curved and the cell requires an accurate positioning and/or orientation for being mounted in a battery module. Furthermore, in the case of screwing, the arrangement of screws requires installation space.

CN 108666466 A discloses a battery module, comprising a positive electrode bus structure with a positive electrode contact piece, a negative bus plate and an insulation reinforcement plate there between. The negative bus plate comprises negative electrode through holes provided with a battery clamping structure including a plurality of elastic claws each. Cylindrical battery cells connected by the positive electrode bus structure and the negative bus plate comprise a concave ring groove into which the plurality of elastic claws is clamped. The battery clamping structure is clamped on the ring groove of the negative electrode of each cylindrical battery cell to attach the cell. The elastic claws of the negative bus plate extend towards the positive electrode bus structure.

According to CN 108666466 A, the electrical connections between the negative bus plate and the cells are realized by the elastic claws that extend towards the positive electrode bus structure. Thus, the manufacture of the negative bus plate and the arrangement of the clamps thereon are highly specific with respect to the arrangement of cells which makes the manufacture of the negative bus plate complex as, e.g., sheet metal needs to be stamped precisely to achieve an accurate arrangement of cells and an accurate orientation of the elastic claws. Furthermore, the elasticity of the elastic claws can decrease in the course of time due to thermal, chemical and/or mechanical influences. A decrease of elasticity can lead to a decreasing electrical and/or mechanical connection between the cell and the negative bus plate.

It is thus an object of the present disclosure to overcome or reduce at least some of the drawbacks of the prior art and to provide an alternative battery module that can be effectively and cost-effectively manufactured without the need for screwing, bonding or welding to connect one or more current collector structures with one or more cells.

### Summary of Invention

Embodiments of the present disclosure seek to solve at least one of the problems existing in the prior art to at least some extent. In particular, a battery module for an electric vehicle is provided, comprising: a plurality of secondary battery cells, at least one positive current collector structure, and at least one negative current collector structure; wherein each of the secondary battery cells comprises an electrode assembly including a positive electrode, a negative electrode, and a separator interposed between the positive electrode and the negative electrode, a positive terminal electrically connected to the positive electrode, a negative terminal electrically connected to the negative electrode, and a case receiving the electrode assembly; wherein the at least one positive current collector structure is arranged to interconnect the positive terminals of at least two of the plurality of secondary battery cells with each other, and the at least one negative current collector structure is arranged to interconnect the negative terminals of at least two of the plurality of secondary battery cells with each other; wherein the case of each of the plurality of secondary battery cells comprises a groove, wherein the groove is arranged along a circumference of said case and the groove comprises at least a part of the negative terminal of said secondary battery cell. The present disclosure also relates to a battery pack, an electric vehicle, and to a method of mounting a battery module.

According to the invention the at least one negative current collector structure comprises at least one flat negative busbar arranged in a plane that is aligned with the circumference of the case of each of at least two of the plurality of secondary battery cells, wherein the at least one flat negative busbar projects into the groove of the case of each of said at least two secondary battery cells to connect the negative current collector structure and the negative terminals of said at least two secondary battery cells with each other.

In other words, the negative busbar and the grooves of at least two secondary battery cells are aligned in the same plane so that the negative busbar can easily project into the grooves to establish a mechanical and electrical connection between the negative current collector structure and the secondary battery cells. The grooves function as slots in which the at least one negative busbar is inserted to achieve a reliable mechanical and electrical connection. This avoids bonding, welding and/or screwing to interconnect the negative current collector structure and the secondary battery cells and thereby facilitates the manufacture of the battery module. The negative busbar is flat, i.e., the negative current collector structure comprises a planar portion that forms the negative busbar, wherein the size of the negative busbar is smaller in the direction perpendicular to the plane of the circumference of said at least two secondary battery cells than in the other directions. That the at least one negative current collector structure comprises at least one flat negative busbar arranged in a plane that is aligned with the circumference of the case of each of said at least two of the plurality of secondary battery cells also implies that at least one flat negative busbar is arranged in a plane that is aligned with the groove of the case of each of said at least two of the plurality of secondary battery cells. This facilitates the manufacture of the battery module as the negative busbar can easily project into the grooves of the secondary battery cells. The projection of the negative busbar into the grooves of the secondary battery cells improves the mechanical integration of the secondary battery cells within the battery module by mounting the secondary battery cells at their grooves to the negative busbar. By directly contacting the negative current collector structure via the negative busbar with the negative terminal that is comprised by the groove, a low electrical transition resistance can be achieved.

In contrast to the prior art as described above, due to the alignment of the negative busbar with the circumference of at least two of the plurality of secondary battery cells, the manufacture of the battery module is improved by avoiding the manufacture of elastic claws that extend out of the plane that is aligned with the circumference of at least two of the plurality of secondary battery cells. The negative busbar according to the invention does not require elastic elements and thereby can improve the reliability of the connection between the negative current collector structure and the secondary battery cells.

According to another aspect of the present disclosure, a battery pack comprising a battery module as defined above is provided. As the battery modules comprises reliable mechanical and electrical connections, and can be mounted effectively, the improved connection between the cell and the one or more current collector structures improves the reliability of mechanical and electrical connections of the battery pack and of the efficiency of mounting the battery pack.

According to another aspect of the present disclosure, an electric vehicle comprising a battery module as defined above is provided. As the battery modules comprises reliable mechanical and electrical connections, and can be mounted effectively, the improved connection between the cell and the one or more current collector structures improves the reliability of mechanical and electrical connections of the electric vehicle and of the efficiency of mounting of the electric vehicle.

According to another aspect of the present disclosure, a method of mounting a battery module is provided.

The method of mounting a battery module comprises the following steps: - providing a plurality of secondary battery cells, at least one positive current collector structure, and at least one negative current collector structure; wherein each of the secondary battery cells comprises an electrode assembly including a positive electrode, a negative electrode, and a separator interposed between the positive electrode and the negative electrode, a positive terminal electrically connected to the positive electrode, a negative terminal electrically connected to the negative electrode, and a case receiving the electrode assembly; wherein the at least one positive current collector structure is arranged to interconnect the positive terminals of at least two of the plurality of secondary battery cells with each other, and the at least one negative current collector structure is arranged to interconnect the negative terminals of at least two of the plurality of secondary battery cells with each other; wherein the case of each of the plurality of secondary battery cells comprises a groove, wherein the groove is arranged along a circumference of said case and the groove comprises at least a part of the negative terminal of said secondary battery cell; and wherein the at least one negative current collector structure comprises at least one flat negative busbar; - arranging the at least one negative busbar in a plane that is aligned with the circumference of the case of each of at least two of the plurality of secondary battery cells; and - connecting the negative current collector structure and the negative terminals of said at least two of the plurality of secondary battery cells with each other by arranging the at least one flat negative busbar to project into the groove of the case of each of said at least two secondary battery cells.

In other words, at least two of the plurality of secondary battery cells are arranged so that the planes in which their respective circumferences and thereby their grooves are arranged coincide. In this plane, the at least one negative busbar is aligned to facilitate the manufacture of the battery module.

Further aspects of the present disclosure could be learned from the dependent claims or the following description.

Preferably, the at least one negative busbar has a thickness, and the groove of each of the plurality of secondary battery cells has a width, wherein the thickness of the at least one negative busbar is larger than the width of the groove to achieve that the negative busbar is oversized compared to the groove. I.e., the negative busbar is pressed into the groove the achieve a particular reliable mechanical and electrical connection between the negative busbar and the secondary battery cells. The thickness of the negative busbar is a measure for the size of the negative busbar in a direction perpendicular to the plane in which the negative busbar is arranged, i.e., perpendicular to the circumference and/or the groove of the at least two secondary battery cells. The width of the groove is the size of the groove perpendicular to the circumference of the at least two secondary battery cells.

Optionally, the groove of each of the plurality of secondary battery cells comprises a base and a lateral surface, wherein the lateral surface comprises a protrusion, wherein the protrusion is arranged to mechanically fasten the negative busbar within the groove to further improve the mechanical connection between the negative busbar and the secondary battery cells. In this embodiment, the protrusion, i.e., the shoulder, provides a decrease of the width of the groove which can, in the mounted state, improve forces exerted between the lateral surface of the groove and the negative busbar.

In a preferred embodiment, the negative busbar and/or the groove of each of the plurality of secondary battery cells is adapted to plastically deform the negative busbar upon insertion of the negative busbar into said groove. The plastic deformation of the negative busbar, and alternatively or additionally of the groove, guarantees a reliable connection that is preferably based on adhesion of surfaces and/or surface sections of the negative busbars and of the groove. This leads to a reliable mechanical contact and excellent electrical contact with low contact resistance. The plastic deformation provides an irreversible connection, i.e., due to the plastic deformation of the negative busbar and/or the groove, i.e., the case, the connection cannot be released without leaving the negative busbar in a state in which the connection cannot be realized afterwards.

Optionally, the case of each of the plurality of secondary battery cells has a cylindrical shape defining an axis, and the groove and the negative terminal of said case is arranged along the circumference of said case. In this embodiment, the case has an axis defined by the cylindrical shape and a circumference that extends in a plane orthogonal the said axis and along the surface of said case. That is, in this embodiment, the groove is a circular groove. The circumferential arrangement of the groove and of the negative terminal guarantees that the cells can be mounted in any orientation with respect to rotation around the axis of the case of each of the cells which leads to an effective and reliable mounting of cells without the need to orient cells around their axes. This simplifies the method of mounting such a battery module by lowering the number of method steps and reducing the complexity of the method by avoiding the orientation of the cells around their axes.

Preferably, the at least one negative current collector structure is made of sheet metal to provide a cost-effective embodiment that provides an appropriate stiffness to form the negative busbars and to mechanically connect the negative current collector structure with the secondary battery cells.

Optionally, the battery module comprises two negative current collector structures each comprising a negative busbar, wherein the two negative current collector structures and/or the two negative busbars are arranged on opposite lateral surface sections of the case of each of the plurality of secondary battery cells to facilitate an efficient assembly of the battery module and achieve an improved mechanical integration of the battery cells within the battery module.

Preferably, the battery module comprises two negative current collector structures each comprising a negative busbar, wherein the plurality of secondary battery cells is arranged between the two negative current collector structures and/or the between the two negative busbars to facilitate an efficient assembly of the battery module and achieve an improved mechanical integration of the battery cells within the battery module.

In a preferred embodiment, the plurality of secondary battery cells is linearly arranged, and each of the two negative current collector structures and/or each of the negative busbars extend in parallel to the linearly arranged secondary battery cells to further improve the mechanical integration of the battery cells within the battery module. This embodiment is particularly space-saving and leads to a compact battery module.

Optionally, the groove of each of the plurality of secondary battery cells and each of the negative current collector structures and/or each of the negative busbars are arranged in the same plane in alignment with the circumference of the case of each of the plurality of secondary battery cells. In this embodiment, each groove and each negative current collector structure and/or each of the negative busbar are aligned with each other. This leads to a space-saving battery module and to an improved mountability.

Preferably, the at least one positive current collector structure and the positive terminals of said at least two of the plurality of secondary battery cells are mechanically and electrically connected with each other by being pressed onto each other. In this embodiment, the at least one negative busbar and the groove of each of the at least two of the plurality of secondary battery cells are arranged to position, in the mounted state, said battery cells so that the positive terminals are pressed onto said at least one positive current collector structure, i.e., the distance between the positive terminal and the groove coincide with the distance between the negative busbar and the positive current collector structure.

Preferably, in the method according to the invention, arranging the at least one flat negative busbar to project into the groove of the case of said at least two secondary battery cells is performed by moving said at least two secondary battery cells and the at least one flat negative busbar relative to each other and in the plane that is aligned with the circumference of the case. E.g, in this embodiment, the battery module is mounted by shifting the battery cells along the negative busbar. The negative busbar functions as a guide for the secondary battery cells that are to be shifted and/or slided along the negative busbar by engaging with the respective grooves of the cells.

### Brief Description of the Drawings

Features will become apparent to those of ordinary skill in the art by describing in detail exemplary embodiments with reference to the attached drawings in which:
- Fig. 1: illustrates a schematic view of an electric vehicle;
- Fig. 2: illustrates a sectional view of a battery module according an embodiment of the invention; and
- Fig. 3: illustrates a perspective view of an embodiment of a battery module.

### Detailed Description of the Invention

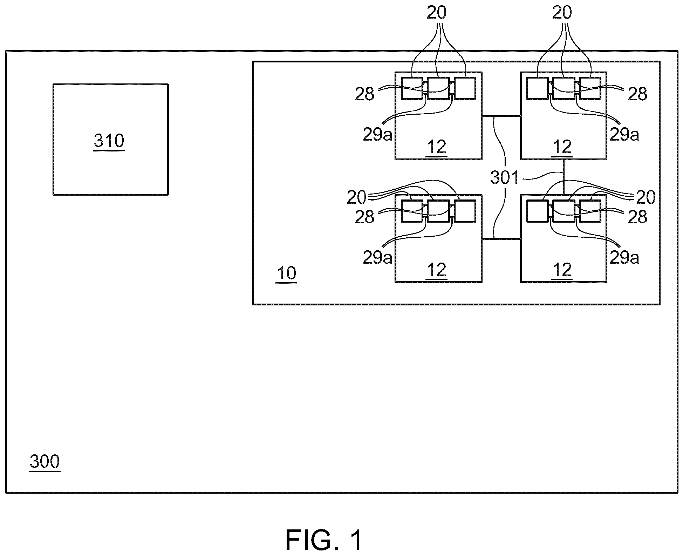

Figure 1 illustrates a schematic view of an electric vehicle 300. The electric vehicle 300 is propelled by an electric motor 310, using energy stored in rechargeable batteries arranged in a battery pack 10. The battery pack 10 is a set of any number of battery modules 12. Rechargeable batteries are used as a battery module 12 formed of a plurality of secondary battery cells 20. Components of the battery pack 10 include the individual battery modules 12, and the interconnects 301, which provide electrical conductivity between battery modules 12. For simplicity, in this schematic representation, each battery module 12 is coupled to a common positive current collector structure 28 and to a common negative current collector structure 29a, i.e., in each battery pack 10, battery modules 12 are electrically coupled with each other by a common positive current collector structure 28 and by a common negative current collector structure 29a.

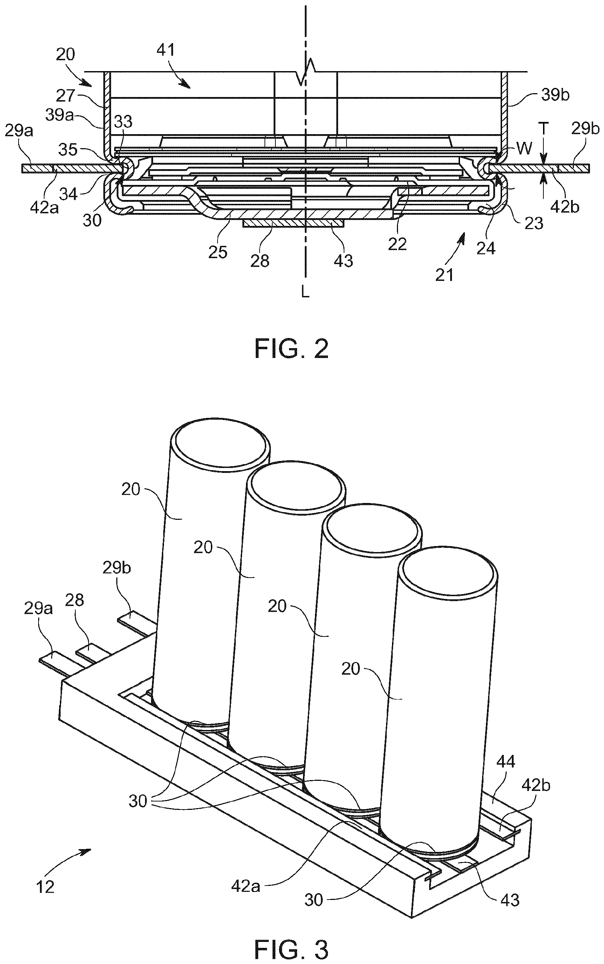

Figure 2 illustrates a sectional view of a battery module 12 according an embodiment of the invention.

The battery module 12 comprises a plurality of secondary battery cells 20, one positive current collector structure 28, and two negative current collector structures 29a, 29b. In this sectional view, only one secondary battery cell 20 is shown.

The secondary battery cell 20 comprises an electrode assembly 41 including a positive electrode, a negative electrode, and a separator interposed between the positive electrode and the negative electrode. A negative terminal 23 is electrically connected to the negative electrode and a cap-up acting as a positive terminal 25 electrically connected to the positive electrode. A case 27 is receiving the electrode assembly 41. The secondary battery cell 20 further comprises a cap assembly 21 with a positive temperature coefficient fuse 22. An isolator 24 is interposed between the negative terminal 23 and the positive terminal 25.

The case 27 is adapted to form the negative terminal 23, i.e., the case 27 is preferably made of metal and the entire case 27 can function as the negative terminal 23.

The case 27 comprises a groove 30, also called nut, that is arranged along the circumference of the case 27 and the groove 30 comprises a part of the negative terminal 23, i.e., at least a part of the negative terminal 23 is arranged in the groove 30. The case 27 has a cylindrical shape defining an axis L and the groove 30 is a circular groove. The groove 30 and the negative terminal 23 of the case 27 is arranged perpendicular to the axis L.

Each of the two negative current collector structures 29a, 29b interconnects the negative terminals 23 of at least two secondary battery cells 20 with each other. To interconnect the negative terminals 23 of the secondary battery cells 20, each of the two negative current collector structures 29a, 29b comprises a negative busbar 42a, 42b. Each of the negative busbars 42a, 42b projects into the groove 30 of the case 27 of at least two of the secondary battery cells 20 to electrically connect the negative current collector structures 29a, 29b and the negative terminal 23 (see also Figure 3). The mechanical connection between each of the negative busbars 42a, 42b and the groove 30 is achieved by pressing the negative busbar 42a, 42b into the groove 30 of the secondary battery cells 20.

The negative busbars 42a, 42b are flat, i.e. the size of the negative busbars 42a, 42b is smaller in the direction perpendicular to the plane of the circumference of the secondary battery cells 20, i.e. in the direction of the axis L, than in the other directions. The negative busbars 42a, 42b are arranged in a plane that is aligned with the circumference of the case 27 of the secondary battery cells 20, i.e, The negative busbars 42a, 42b are aligned with the grooves 30 of the secondary battery cells 20 to project into the grooves 30.

The groove 30 of each secondary battery cell 20 comprises a base 33 and a lateral surface 34. To improve the connection between the negative busbars 42a, 42b and the secondary battery cells 20, the lateral surface 34 comprises a protrusion 35, wherein the protrusion 35 mechanically fastens the negative busbars 42a, 42b within the groove 30. The protrusion 35 thereby reduces the width W of the groove 30 which can increase forces that are exerted between the negative busbars 42a, 42b and the lateral surface 34 in the mounted state and during manufacturing of the battery module 12 when the negative busbars 42a, 42b are pressed into the groove 30. The protrusion 35 is arranged at a lateral surface section of the lateral surface 34 distal to the base 33. I.e, with reference to the cylindrical case 27 and its axis L, the protrusion 35 is arranged radially outwardly so that the cross section of the groove 30 changes non-monotonically from a small cross section near the base 33, to a larger cross section between the base 33 and the protrusion 35, to a smaller cross section at the protrusion 35 to a larger cross section end of the lateral surface 34 distal to the base 33. The two negative busbars 42a, 42b have a thickness T each, and the width W of the groove 30 of each of the plurality of secondary battery cells 20 is smaller than thickness T of the negative busbars 42a, 42b to realize that the busbars 42a, 42b are oversized so that the busbars 42a, 42b engage reliable with the groove 30.

The negative busbars 42a, 42b and the groove 30 are adapted to plastically deform the negative busbars 42a, 42b upon insertion of the negative busbars 42a, 42b into said groove 30. Additionally or alternatively, the groove 30, i.e., the case 27, can be deformed upon insertion of each of the negative busbars 42a, 42b into said groove 30. The connection between the negative busbars 42a, 42b and the groove 30 is formed by pressing the negative connection busbars 42a, 42b into the groove 30. Thereby, the negative busbars 42a, 42b deform plastically due to forces between the negative busbars 42a, 42b and the lateral surface 34 and/or the protrusion 35. The connection connects the negative busbars 42a, 42b and the groove 30 reliably and irreversibly.

The negative current collector structure 29a, 29b and the negative busbars 42a, 42b are made of sheet metal.

The two negative current collector structures 29a, 29b and the two negative busbars 42a, 42b are arranged on opposite lateral surface sections 39a, 39b of the cases 27 of each of the plurality of secondary battery cells 20. i.e. one negative busbar 42a is diametrically oppositely arranged to another negative busbar 42b, wherein the term diametrically refers to the diameter of the cylindrical case 27. I.e., the opposite lateral surface sections 39a, 39b are surface sections of the case 27 without any circumferential overlap. The plurality of secondary battery cells 20 is arranged between the two negative current collector structures 29a, 29b and the two negative busbars 42a, 42b (see also Figure 3).

The positive current collector structure 28 interconnects the positive terminals 25 of the secondary battery cells 20 with each other.

Figure 3 illustrates a perspective view of an embodiment of a battery module 12.

In this representation, the exemplary embodiment of the battery module 12 comprises four secondary battery cells 20, each of which as described with reference to Figure 2.

To interconnect the positive terminals 25 of the secondary battery cells 20, the positive current collector structure 28 comprises a positive busbar 43.

The positive current collector structure 28 with its positive busbar 43, the negative current collector structures 29a, 29b with their negative busbars 42a, 42b, and the secondary battery cells 20 are retained by a retainer 44.

The plurality of secondary battery cells 20 is linearly arranged, and each of the two negative current collector structures 29a, 29b and each of the two negative busbars 42a, 42b extend in parallel to the linearly arranged secondary battery cells 20.

To interconnect the positive terminals 25 and the positive current collector structure 28, the positive terminal 25 of each of the secondary battery cells 20 is pressed onto the positive current collector structure 28. This is achieved by the arrangement of the grooves 30 and the positive terminals 25 of the secondary battery cells 20 relative to the negative busbars 42a, 42b and the positive current collector structure 28. By pressing the negative busbars 42a, 42b into the grooves 30, the positioning of the secondary battery cell 20 is determined, in particular with respect to its axis L. The retainer 44, the negative busbars 42a, 42b, and the positive busbar 43 are arranged so that, in the mounted state, the positive terminal 25 is pressed onto the positive current collector structure 28 to achieve mechanical and electrical contact between the positive terminal 25 and the positive current collector structure 28. I.e., along the axis L of the cases 27 of the secondary battery cells 20, the distance between the negative busbars 42a, 42b and the positive busbar 43 matches the distance between the grooves 30 of the secondary battery cells 20 and the positive terminal 25.

In a non-shown embodiment, a section of the case 27 can function as the negative terminal 23.

In particular, the section of the case 27 that comprises the groove 30, the groove 30 and/or a part of the groove 30, such as the lateral surface 34 and/or the base 33, can be adapted to function as the negative terminal 23. This could ensure that the negative busbars 42a, 42b can be reliably connected to the negative terminal 23 while the remainder of the case 37 could be electrically isolating.

### Reference signs

- 10: battery pack
- 12: battery module
- 20: secondary battery cell
- 21: cap assembly
- 22: positive temperature coefficient fuse
- 23: negative terminal
- 24: isolator
- 25: positive terminal
- 27: case
- 28: positive current collector structure
- 29a, 29b: negative current collector structure
- 30: groove
- 33: base
- 34: lateral surface
- 35: protrusion
- 39a, 39b: lateral surface section
- 41: electrode assembly
- 42a, 42b: negative busbar
- 43: positive busbar
- 44: retainer
- 300: electric vehicle
- 301: interconnects
- 310: electric motor

- L: axis
- T: thickness
- W: width

## Claims

1. A battery module (12) for an electric vehicle (300), comprising:
- a plurality of secondary battery cells (20), at least one positive current collector structure (28), and at least one negative current collector structure (29a, 29b); wherein
- each of the secondary battery cells (20) comprises an electrode assembly (41) including a positive electrode, a negative electrode, and a separator interposed between the positive electrode and the negative electrode, a positive terminal (25) electrically connected to the positive electrode, a negative terminal (23) electrically connected to the negative electrode, and a case (27) receiving the electrode assembly (21); wherein
- the at least one positive current collector structure (28) is arranged to interconnect the positive terminals (25) of at least two of the plurality of secondary battery cells (20) with each other, and the at least one negative current collector structure (29a, 29b) is arranged to interconnect the negative terminals (23) of at least two of the plurality of secondary battery cells (20) with each other; wherein
- the case (27) of each of the plurality of secondary battery cells (20) comprises a groove (30), wherein the groove (30) is arranged along a circumference of said case (27) and the groove (30) comprises at least a part of the negative terminal (23) of said secondary battery cell (20); and wherein
- the at least one negative current collector structure (29a, 29b) comprises at least one flat negative busbar (42a, 42b) arranged in a plane that is aligned with the circumference of the case (27) of each of at least two of the plurality of secondary battery cells (20), wherein the at least one flat negative busbar (42a, 42b) projects into the groove (30) of the case (27) of each of said at least two secondary battery cells (20) to connect the negative current collector structure (29a, 29b) and the negative terminals (23) of said at least two secondary battery cells (20) with each other, **characterized in that** the at least one flat negative busbar (42a, 42b) and the groove (30) of the case (27) of each of said at least two secondary battery cells (20) are aligned in the same plane.

2. The battery module (12) as claimed claim 1, wherein
- the at least one negative busbar (42a, 42b) has a thickness (T), and the groove (30) of each of the plurality of secondary battery cells (20) has a width (W), wherein the thickness (T) of the negative busbar (42a, 42b) is larger than the width (W) of the groove (30).

3. The battery module (12) as claimed in claim any one of the preceding claim, wherein
- the groove (30) of each of the plurality of secondary battery cells (20) comprises a base (33) and a lateral surface (34), wherein the lateral surface (34) comprises a protrusion (35), wherein the protrusion (35) is arranged to mechanically fasten the negative busbar (42a, 42b) within the groove (30).

4. The battery module (12) as claimed in any one of the preceding claims, wherein
- the negative busbar (42a, 42b) and/or the groove (30) of each of the plurality of secondary battery cells (20) is adapted to plastically deform the negative busbar (42a, 42b) upon insertion of the negative busbar (42a, 42b) into said groove (30).

5. The battery module (12) as claimed in any one of the preceding claims, wherein
- the case (27) of each of the plurality of secondary battery cells (20) has a cylindrical shape defining an axis (L), and the groove (30) and the negative terminal (23) of said case (27) is arranged perpendicular to the axis (L).

6. The battery module (12) as claimed in any one of the preceding claims, wherein
- the at least one negative current collector structure (29a, 29b) is made of sheet metal.

7. The battery module (12) as claimed in any one of the preceding claims wherein
- the battery module (12) comprises two negative current collector structures (29a, 29b) each comprising a negative busbar (42a, 42b), wherein the two negative current collector structures (29a, 29b) and/or the two negative busbars (42a, 42b) are arranged on opposite lateral surface sections (39a, 39b) of the case (27) of the plurality of secondary battery cells (20).

8. The battery module (12) as claimed in any one of the preceding claims, wherein
- the battery module (12) comprises two negative current collector structures (29a, 29b) each comprising a negative busbar (42a, 42b), wherein the plurality of secondary battery cells (20) is arranged between the two negative current collector structures (29a, 29b) and/or the between the two negative busbars (42a, 42b).

9. The battery module (12) as claimed in any of claims 7 or 8, wherein
- the plurality of secondary battery cells (20) is linearly arranged, and each of the two negative current collector structures (29a, 29b) and/or each of the two negative busbars (42a, 42b) extend in parallel to the linearly arranged secondary battery cells (20).

10. The battery module (12) as claimed in any of claims 7 to 9, wherein
- the groove (30) of each of the plurality of secondary battery cells (20) and each of the negative current collector structures (29a, 29b) and/or each of the negative busbars (42a, 42b) are arranged in the same plane in alignment with the circumference of the case (27) of each of the plurality of secondary battery cells (20).

11. The battery module (12) as claimed in any one of the preceding claims, wherein
- the at least one positive current collector structure (28) and the positive terminals (25) of said at least two of the plurality of secondary battery cells (20) are mechanically and electrically connected with each other by being pressed onto each other.

12. A battery pack (10), comprising:
- a plurality of battery modules (12) as claimed in any one of the preceding claims and interconnects (301) to connect the battery modules (12) with each other.

13. An electric vehicle (300) comprising a battery pack (10) according to claim 12.

14. A method of mounting a battery module (12), comprising the following steps:
- providing a plurality of secondary battery cells (20), at least one positive current collector structure (28), and at least one negative current collector structure (29a, 29b); wherein each of the secondary battery cells (20) comprises an electrode assembly (41) including a positive electrode, a negative electrode, and a separator interposed between the positive electrode and the negative electrode, a positive terminal (25) electrically connected to the positive electrode, a negative terminal (23) electrically connected to the negative electrode, and a case (27) receiving the electrode assembly (41); wherein the at least one positive current collector structure (28) is arranged to interconnect the positive terminals (25) of at least two of the plurality of secondary battery cells (20) with each other, and the at least one negative current collector structure (29a, 29b) is arranged to interconnect the negative terminals (23) of at least two of the plurality of secondary battery cells (20) with each other; wherein the case (27) of each of the plurality of secondary battery cells (20) comprises a groove (30), wherein the groove (30) is arranged along a circumference of said case (27) and the groove (30) comprises at least a part of the negative terminal (23) of said secondary battery cell (20); and wherein the at least one negative current collector structure (29a, 29b) comprises at least one flat negative busbar (42a, 42b);
- arranging the at least one negative busbar (42a, 42b) in a plane that is aligned with the circumference of the case (27) of each of at least two of the plurality of secondary battery cells (20); and
- connecting the negative current collector structure (29a, 29b) and the negative terminals (23) of said at least two of the plurality of secondary battery cells (20) with each other by arranging the at least one flat negative busbar (42a, 42b) to project into the groove (30) of the case (27) of each of said at least two secondary battery cells (20), **characterized in that** the at least one flat negative busbar (42a, 42b) and the groove (30) of the case (27) of each of said at least two secondary battery cells (20) are aligned in the same plane.

15. The method of mounting a battery module (12) as claimed in claim 14, wherein
- arranging the at least one flat negative busbar (42a, 42b) to project into the groove (30) of the case (27) of said at least two secondary battery cells (20) is performed by moving said at least two secondary battery cells (20) and the at least one flat negative busbar (42a, 42b) relative to each other and in the plane that is aligned with the circumference of the case (27).

## Patentansprüche

1. Batteriemodul (12) für ein elektrisches Fahrzeug (300), umfassend:
- eine Mehrzahl von Sekundärbatteriezellen (20), mindestens eine positive Stromkollektorstruktur (28) und mindestens eine negative Stromkollektorstruktur (29a, 29b); wobei
- jede der Sekundärbatteriezellen (20) eine Elektrodenbaugruppe (41) umfasst, aufweisend eine positive Elektrode, eine negative Elektrode und einen Separator, eingefügt zwischen der positiven Elektrode und der negativen Elektrode, einen positiven Anschluss (25), elektrisch angeschlossen an die positive Elektrode, einen negativen Anschluss (23), elektrisch angeschlossen an die negative Elektrode, und ein Gehäuse (27), das die Elektrodenbaugruppe (21) aufnimmt; wobei
- die mindestens eine positive Stromkollektorstruktur (28) dazu angeordnet ist, die positiven Anschlüsse (25) von mindestens zwei der Mehrzahl von Sekundärbatteriezellen (20) miteinander zusammenzuschalten, und die mindestens eine negative Stromkollektorstruktur (29a, 29b) dazu angeordnet ist, die negativen Anschlüsse (23) von mindestens zwei der Mehrzahl von Sekundärbatteriezellen (20) miteinander zusammenzuschalten, wobei
- das Gehäuse (27) jeder der Mehrzahl von Sekundärbatteriezellen (20) eine Rille (30) umfasst, wobei die Rille (30) entlang einem Umfang des Gehäuses (27) angeordnet ist und die Rille (30) zumindest einen Teil des negativen Anschlusses (23) der Sekundärbatteriezelle (20) umfasst, und wobei
- die mindestens eine negative Stromkollektorstruktur (29a, 29b) mindestens eine flache negative Sammelschiene (42a, 42b) umfasst, die in einer Ebene angeordnet ist, die auf den Umfang des Gehäuses (27) jeder von mindestens zwei der Mehrzahl von Sekundärbatteriezellen (20) ausgerichtet ist, wobei die mindestens eine flache negative Sammelschiene (42a, 42b) in die Rille (30) des Gehäuses (27) jeder der mindestens zwei Sekundärbatteriezellen (20) vorspringt, um die negative Stromkollektorstruktur (29a, 29b) und die negativen Anschlüsse (23) der mindestens zwei Sekundärbatteriezellen (20) aneinander anzuschließen, **dadurch gekennzeichnet, dass** die mindestens eine flache negative Sammelschiene (42a, 42b) und die Rille (30) des Gehäuses (27) jeder der mindestens zwei Sekundärbatteriezellen (20) in derselben Ebene ausgerichtet sind.

2. Batteriemodul (12) nach Anspruch 1, wobei
- die mindestens eine negative Sammelschiene (42a, 42b) eine Dicke (T) aufweist und die Rille (30) jeder der Mehrzahl von Sekundärbatteriezellen (20) eine Breite (W) aufweist, wobei die Dicke (T) der negativen Sammelschiene (42a, 42b) größer als die Breite (W) der Rille (30) ist.

3. Batteriemodul (12) nach einem der vorangehenden Ansprüche, wobei
- die Rille (30) jeder der Mehrzahl von Sekundärbatteriezellen (20) eine Basis (33) und eine Seitenfläche (34) umfasst, wobei die Seitenfläche (34) einen Vorsprung (35) umfasst, wobei der Vorsprung (35) dazu angeordnet ist, die negative Sammelschiene (42a, 42b) innerhalb der Rille (30) mechanisch zu befestigen.

4. Batteriemodul (12) nach einem der vorangehenden Ansprüche, wobei
- die negative Sammelschiene (42a, 42b) und/oder die Rille (30) jeder der Mehrzahl von Sekundärbatteriezellen (20) dazu angepasst sind/ist, die negative Sammelschiene (42a, 42b) nach dem Einführen der negativen Sammelschiene (42a, 42b) in die Rille (30) plastisch zu verformen.

5. Batteriemodul (12) nach einem der vorangehenden Ansprüche, wobei
- das Gehäuse (27) jeder der Mehrzahl von Sekundärbatteriezellen (20) eine zylindrische Form aufweist, die eine Achse (L) definiert, und die Rille (30) und der negative Anschluss (23) des Gehäuses (27) lotrecht zu der Achse (L) angeordnet sind.

6. Batteriemodul (12) nach einem der vorangehenden Ansprüche, wobei
- die mindestens eine negative Stromkollektorstruktur (29a, 29b) aus Blech hergestellt ist.

7. Batteriemodul (12) nach einem der vorangehenden Ansprüche, wobei
- das Batteriemodul (12) zwei negative Stromkollektorstrukturen (29a, 29b) umfasst, die jeweils eine negative Sammelschiene (42a, 42b) umfassen, wobei die zwei negativen Stromkollektorstrukturen (29a, 29b) und/oder die zwei negativen Sammelschienen (42a, 42b) auf gegenüberliegenden Seitenflächenabschnitten (39a, 39b) des Gehäuses (27) der Mehrzahl von Sekundärbatteriezellen (20) angeordnet sind.

8. Batteriemodul (12) nach einem der vorangehenden Ansprüche, wobei
- das Batteriemodul (12) zwei negative Stromkollektorstrukturen (29a, 29b) umfasst, die jeweils eine negative Sammelschiene (42a, 42b) umfassen, wobei die Mehrzahl von Sekundärbatteriezellen (20) zwischen den zwei negativen Stromkollektorstrukturen (29a, 29b) und/oder zwischen den zwei negativen Sammelschienen (42a, 42b) angeordnet ist.

9. Batteriemodul (12) nach einem der Ansprüche 7 oder 8, wobei
- die Mehrzahl von Sekundärbatteriezellen (20) linear angeordnet ist und jede der zwei negativen Stromkollektorstrukturen (29a, 29b) und/oder jede der zwei negativen Sammelschienen (42a, 42b) sich parallel zu den linear angeordneten Sekundärbatteriezellen (20) erstrecken/erstreckt.

10. Batteriemodul (12) nach einem der Ansprüche 7 bis 9, wobei
- die Rille (30) jeder der Mehrzahl von Sekundärbatteriezellen (20) und jede der negativen Stromkollektorstrukturen (29a, 29b) und/oder jede der negativen Sammelschienen (42a, 42b) in derselben Ebene angeordnet und dabei auf den Umfang des Gehäuses (27) jeder der Mehrzahl von Sekundärbatteriezellen (20) ausgerichtet sind.

11. Batteriemodul (12) nach einem der vorangehenden Ansprüche, wobei
- die mindestens eine positive Stromkollektorstruktur (28) und die positiven Anschlüsse (25) der mindestens zwei der Mehrzahl von Sekundärbatteriezellen (20) mechanisch und elektrisch miteinander verbunden sind, indem sie aufeinandergepresst sind.

12. Batteriepack (10), umfassend:
- eine Mehrzahl von Batteriemodulen (12) nach einem der vorangehenden Ansprüche und Zusammenschalter (301), um die Batteriemodule (12) aneinander anzuschließen.

13. Elektrisches Fahrzeug (300), umfassend einen Batteriepack (10) nach Anspruch 12.

14. Verfahren zur Montage eines Batteriemoduls (12), umfassend die folgenden Schritte:
- Bereitstellen einer Mehrzahl von Sekundärbatteriezellen (20), mindestens einer positiven Stromkollektorstruktur (28) und mindestens einer negativen Stromkollektorstruktur (29a, 29b); wobei jede der Sekundärbatteriezellen (20) eine Elektrodenbaugruppe (41) umfasst, aufweisend eine positive Elektrode, eine negative Elektrode und einen Separator, eingefügt zwischen der positiven Elektrode und der negativen Elektrode, einen positiven Anschluss (25), elektrisch angeschlossen an die positive Elektrode, einen negativen Anschluss (23), elektrisch angeschlossen an die negative Elektrode, und ein Gehäuse (27), das die Elektrodenbaugruppe (41) aufnimmt; wobei die mindestens eine positive Stromkollektorstruktur (28) dazu angeordnet wird, die positiven Anschlüsse (25) von mindestens zwei der Mehrzahl von Sekundärbatteriezellen (20) miteinander zusammenzuschalten, und die mindestens eine negative Stromkollektorstruktur (29a, 29b) dazu angeordnet wird, die negativen Anschlüsse (23) von mindestens zwei der Mehrzahl von Sekundärbatteriezellen (20) miteinander zusammenzuschalten, wobei das Gehäuse (27) jeder der Mehrzahl von Sekundärbatteriezellen (20) eine Rille (30) umfasst, wobei die Rille (30) entlang einem Umfang des Gehäuses (27) angeordnet wird und die Rille (30) zumindest einen Teil des negativen Anschlusses (23) der Sekundärbatteriezelle (20) umfasst; und wobei die mindestens eine negative Stromkollektorstruktur (29a, 29b) mindestens eine flache negative Sammelschiene (42a, 42b) umfasst,
- Anordnen der mindestens einen negativen Sammelschiene (42a, 42b) in einer Ebene, die auf den Umfang des Gehäuses (27) jeder von mindestens zwei der Mehrzahl von Sekundärbatteriezellen (20) ausgerichtet wird, und
- Anschließen der negativen Stromkollektorstruktur (29a, 29b) und der negativen Anschlüsse (23) der mindestens zwei der Mehrzahl von Sekundärbatteriezellen (20) aneinander, indem die mindestens eine flache negative Sammelschiene (42a, 42b) dazu angeordnet wird, in die Rille (30) des Gehäuses (27) jeder der mindestens zwei Sekundärbatteriezellen (20) vorzuspringen, **dadurch gekennzeichnet, dass** die mindestens eine flache negative Sammelschiene (42a, 42b) und die Rille (30) des Gehäuses (27) jeder der mindestens zwei Sekundärbatteriezellen (20) in derselben Ebene ausgerichtet werden.

15. Verfahren zur Montage eines Batteriemoduls (12) nach Anspruch 14, wobei
- das Anordnen der mindestens einen flachen negativen Sammelschiene (42a, 42b) dazu, in die Rille (30) des Gehäuses (27) der mindestens zwei Sekundärbatteriezellen (20) vorzuspringen, durchgeführt wird, indem die mindestens zwei Sekundärbatteriezellen (20) und die mindestens eine flache negative Sammelschiene (42a, 42b) relativ zueinander und in der Ebene, die auf den Umfang des Gehäuses (27) ausgerichtet ist, bewegt werden.

## Revendications

1. Module de batterie (12) pour un véhicule électrique (300), comprenant :
- une pluralité de cellules de batterie secondaire (20), au moins une structure de collecteur de courant positif (28) et au moins une structure de collecteur de courant négatif (29a, 29b) ; dans lequel
- chacune des cellules de batterie secondaire (20) comprend un ensemble d'électrodes (41) comportant une électrode positive, une électrode négative et un séparateur interposé entre l'électrode positive et l'électrode négative, une borne positive (25) électriquement connectée à l'électrode positive, une borne négative (23) électriquement connectée à l'électrode négative et un boîtier (27) recevant l'ensemble d'électrodes (21) ; dans lequel
- l'au moins une structure de collecteur de courant positif (28) est agencée de façon à interconnecter les bornes positives (25) d'au moins deux de la pluralité de cellules de batterie secondaire (20) les unes avec les autres, et l'au moins une structure de collecteur de courant négatif (29a, 29b) est agencée de façon à interconnecter les bornes négatives (23) d'au moins deux de la pluralité de cellules de batterie secondaire (20) les unes avec les autres ; dans lequel
- le boîtier (27) de chacune de la pluralité de cellules de batterie secondaire (20) comprend une rainure (30), dans lequel la rainure (30) est agencée le long d'une circonférence dudit boîtier (27) et la rainure (30) comprend au moins une partie de la borne négative (23) de ladite cellule de batterie secondaire (20) ; et dans lequel
- l'au moins une structure de collecteur de courant négatif (29a, 29b) comprend au moins une barre omnibus négative plate (42a, 42b) agencée dans un plan qui est aligné avec la circonférence du boîtier (27) de chacune d'au moins deux de la pluralité de cellules de batterie secondaire (20), dans lequel l'au moins une barre omnibus négative plate (42a, 42b) fait saillie dans la rainure (30) du boîtier (27) de chacune desdites au moins deux cellules de batterie secondaire (20) pour connecter la structure de collecteur de courant négatif (29a, 29b) et les bornes négatives (23) desdites au moins deux cellules de batterie secondaire (20) les unes aux autres, **caractérisé en ce que** l'au moins une barre omnibus négative plate (42a, 42b) et la rainure (30) du boîtier (27) de chacune desdites au moins deux cellules de batterie secondaire (20) sont alignées dans le même plan.

2. Module de batterie (12) selon la revendication 1, dans lequel
- l'au moins une barre omnibus négative (42a, 42b) a une épaisseur (T), et la rainure (30) de chacune de la pluralité de cellules de batterie secondaire (20) a une largeur (W), dans lequel l'épaisseur (T) de la barre omnibus négative plate (42a, 42b) est supérieure à la largeur (W) de la rainure (30).

3. Module de batterie (12) selon l'une quelconque des revendications précédentes, dans lequel
- la rainure (30) de chacune de la pluralité de cellules de batterie secondaire (20) comprend une base (33) et une surface latérale (34), dans lequel la surface latérale (34) comprend une saillie (35), dans lequel la saillie (35) est agencée de façon à fixer mécaniquement la barre omnibus négative (42a, 42b) à l'intérieur de la rainure (30).

4. Module de batterie (12) selon l'une quelconque des revendications précédentes, dans lequel
- la barre omnibus négative (42a, 42b) et/ou la rainure (30) de chacune de la pluralité de cellules de batterie secondaire (20) est adaptée pour déformer plastiquement la barre omnibus négative (42a, 42b) lors de l'insertion de la barre omnibus négative (42a, 42b) dans ladite rainure (30).

5. Module de batterie (12) selon l'une quelconque des revendications précédentes, dans lequel
- le boîtier (27) de chacune de la pluralité de cellules de batterie secondaire (20) a une forme cylindrique définissant un axe (L), et la rainure (30) et la borne négative (23) dudit boîtier (27) sont agencées perpendiculairement à l'axe (L).

6. Module de batterie (12) selon l'une quelconque des revendications précédentes, dans lequel
- l'au moins une structure de collecteur de courant négatif (29a, 29b) est en tôle.

7. Module de batterie (12) selon l'une quelconque des revendications précédentes, dans lequel
- le module de batterie (12) comprend deux structures de collecteur de courant négatif (29a, 29b) comprenant chacune une barre omnibus négative (42a, 42b), dans lequel les deux structures de collecteur de courant négatif (29a, 29b) et/ou les deux barres omnibus négatives (42a, 42b) sont agencées sur des sections de surface latérales opposées (39a, 39b) du boîtier (27) de la pluralité de cellules de batterie secondaire (20).

8. Module de batterie (12) selon l'une quelconque des revendications précédentes, dans lequel
- le module de batterie (12) comprend deux structures de collecteur de courant négatif (29a, 29b) comprenant chacune une barre omnibus négative (42a, 42b), dans lequel la pluralité de cellules de batterie secondaire (20) est agencée entre les deux structures de collecteur de courant négatif (29a, 29b) et/ou entre les deux barres omnibus négatives (42a, 42b).

9. Module de batterie (12) selon l'une quelconque des revendications 7 ou 8, dans lequel
- la pluralité de cellules de batterie secondaire (20) est agencée de façon linéaire, et chacune des deux structures de collecteur de courant négatif (29a, 29b) et/ou chacune des deux barres omnibus négatives (42a, 42b) s'étendent parallèlement aux cellules de batterie secondaire (20) agencées de façon linéaire.

10. Module de batterie (12) selon l'une quelconque des revendications 7 à 9, dans lequel
- la rainure (30) de chacune de la pluralité de cellules de batterie secondaire (20) et chacune des structures de collecteur de courant négatif (29a, 29b) et/ou chacune des barres omnibus négatives (42a, 42b) sont agencées dans le même plan dans l'alignement de la circonférence du boîtier (27) de chacune de la pluralité de cellules de batterie secondaire (20).

11. Module de batterie (12) selon l'une quelconque des revendications précédentes, dans lequel
- l'au moins une structure de collecteur de courant positif (28) et les bornes positives (25) desdites au moins deux de la pluralité de cellules de batterie secondaire (20) sont connectées mécaniquement et électriquement les unes aux autres en étant pressées les unes contre les autres.

12. Bloc-batterie (10), comprenant :
- une pluralité de modules de batterie (12) selon l'une quelconque des revendications précédentes et des interconnexions (301) pour connecter les modules de batterie (12) les uns aux autres.

13. Véhicule électrique (300) comprenant un bloc-batterie (10) selon la revendication 12.

14. Procédé de montage d'un module de batterie (12), comprenant les étapes suivantes :
- la fourniture d'une pluralité de cellules de batterie secondaire (20), d'au moins une structure de collecteur de courant positif (28) et d'au moins une structure de collecteur de courant négatif (29a, 29b) ; dans lequel chacune des cellules de batterie secondaire (20) comprend un ensemble d'électrodes (41) comportant une électrode positive, une électrode négative et un séparateur interposé entre l'électrode positive et l'électrode négative, une borne positive (25) électriquement connectée à l'électrode positive, une borne négative (23) électriquement connectée à l'électrode négative et un boîtier (27) recevant l'ensemble d'électrodes (41) ; dans lequel l'au moins une structure de collecteur de courant positif (28) est agencée de façon à interconnecter les bornes positives (25) d'au moins deux de la pluralité de cellules de batterie secondaire (20) les unes avec les autres, et l'au moins une structure de collecteur de courant négatif (29a, 29b) est agencée de façon à interconnecter les bornes négatives (23) d'au moins deux de la pluralité de cellules de batterie secondaire (20) les unes avec les autres ; dans lequel le boîtier (27) de chacune de la pluralité de cellules de batterie secondaire (20) comprend une rainure (30), dans lequel la rainure (30) est agencée le long d'une circonférence dudit boîtier (27) et la rainure (30) comprend au moins une partie de la borne négative (23) de ladite cellule de batterie secondaire (20) ; et dans lequel l'au moins une structure de collecteur de courant négatif (29a, 29b) comprend au moins une barre omnibus négative plate (42a, 42b) ;
- l'agencement de l'au moins une barre omnibus négative (42a, 42b) dans un plan qui est aligné avec la circonférence du boîtier (27) de chacune d'au moins deux de la pluralité de cellules de batterie secondaire (20) ; et
- la connexion de la structure de collecteur de courant négatif (29a, 29b) et des bornes négatives (23) desdites au moins deux de la pluralité de cellules de batterie secondaire (20) les unes aux autres par agencement de l'au moins une barre omnibus négative plate (42a, 42b) de façon à ce qu'elle fasse saillie dans la rainure (30) du boîtier (27) de chacune desdites au moins deux cellules de batterie secondaire (20), **caractérisé en ce que** l'au moins une barre omnibus négative plate (42a, 42b) et la rainure (30) du boîtier (27) de chacune desdites au moins deux cellules de batterie secondaire (20) sont alignées dans le même plan.

15. Procédé de montage d'un module de batterie (12) selon la revendication 14, dans lequel
- l'agencement de l'au moins une barre omnibus négative plate (42a, 42b) de façon à ce qu'elle fasse saillie dans la rainure (30) du boîtier (27) desdites au moins deux cellules de batterie secondaire (20) est réalisé par déplacement desdites au moins deux cellules de batterie secondaire (20) et de l'au moins une barre omnibus négative plate (42a, 42b) les unes par rapport aux autres et dans le plan qui est aligné avec la circonférence du boîtier (27).
